# EUROPEAN PATENT APPLICATION

(11) **EP 4 613 502 A1**
(43) Date of publication of application: **10.09.2025**
(21) Application number: 24168255.8
(22) Date of filing: 03.04.2024
(51) Int. Cl.: B60B 1/00, B60B 1/02, B60B 1/04, B60B 5/02

(54) **FIBER REINFORCED THERMOPLASTIC SPOKE AND MANUFACTURING METHOD FOR THE SAME**

(30) Priority: 06.03.2024 TW 113108040
(71) Applicant: Corex Materials Corporation, Taichung City (TW)
(72) Inventor: CHIU, Shao-Chen, Taichung City (TW)
(74) Representative: Cabinet Chaillot

(57) **Abstract**

A spoke has a rod (10) and at least one tube (20A/20B). The rod (10) is made of a composite material containing thermoplastic resin and fibers. Each one of the at least one tube (20A/20B) is mounted on and around the rod (10) and is heated and pressed with the rod (10) to form at least one engaging recess (21) radially embedded in the rod (10). The spoke engages the at least one tube (20A/20B) and the rod (10) via thermoforming the at least one tube (20A/20B) and the rod (10) together.

## Description

### 1. Field of the Invention

The present invention relates to a part of a bicycle, and more particularly to a spoke having a rod made of a composite material containing thermoplastic resin and fibers and having a solid structure.

### 2. Description of Related Art

With the thriving of bicycling, more and more people choose bicycles as equipment of transport and workout. A traditional spoke has a rod and two connecting units sleeved on and fixed to two opposite ends of the rod respectively. The two connecting units are configured to connect with the hub or the rim. Each connecting unit may be a spoke nipple.

A conventional carbon spoke has a carbon rod made of a composite material containing thermoplastic resin and carbon fibers. In order to fix the carbon rod and each connecting unit and to prevent the carbon rod and the connecting unit of the conventional carbon spoke from moving relative to each other, an inner surface of the connecting unit is coated by glue to combine the carbon rod and the connecting unit. Alternatively, the inner surface of each connecting unit may have a protrusion made of solidified glue to restrict the carbon rod and also prevent the carbon rod and the connecting unit from moving relative to each other.

However, over a period of time, the glue at the inner surface of each connecting unit would be deteriorated. The combination ability of the glue is reduced accordingly. Therefore, the connecting units and the carbon rod are often detached from each other.

To overcome the shortcomings of the conventional carbon spoke, the present invention provides a fiber reinforced thermoplastic spoke and manufacturing method for the same to mitigate or obviate the aforementioned problems.

The main objective of the present invention is to promote a connection stability of a spoke made of a composite material containing thermoplastic resin and fibers.

The spoke has a rod and at least one tube. The rod is made of a composite material containing thermoplastic resin and fibers. Each one of the at least one tube is mounted on and around the rod and is heated and pressed with the rod to form at least one engaging recess radially embedded in the rod. The spoke in accordance with the present invention engages the at least one tube and the rod via thermoforming the at least one tube and the rod together.

The manufacturing method for a fiber reinforced thermoplastic spoke has a tube assembly step, a thermoforming step, and a finishing step. The tube assembly step: preparing a rod made of a composite material containing thermoplastic resin and fibers and a tube and mounting the tube on and around the rod. The thermoforming step: heating and pressing the rod and the tube together to deform the rod and the tube together to form at least one engaging recess, radially embedded in the rod for engaging the tube and the rod. The finishing step: processing the rod to remove rough edges, formed by heating and shaping, on the rod.

Wherein the amount of said tube is optional.

Other objects, advantages, and novel features of the invention will become more apparent from the following detailed description when taken in conjunction with the accompanying drawings.
Fig. 1 is an exploded perspective view of a first embodiment of a fiber reinforced thermoplastic spoke in accordance with the present invention;
Fig. 2 is a perspective view of the spoke in Fig. 1;
Fig. 3 is a cross-sectional side view of the spoke in Fig. 1;
Fig. 4 is an enlarged cross-sectional side view of the spoke in Fig. 1;

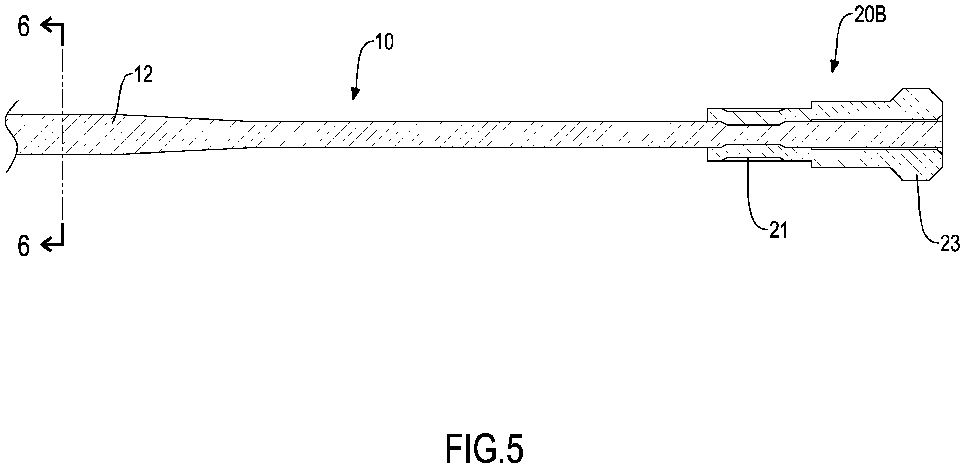

Fig. 5 is another enlarged cross-sectional side view of the spoke in Fig. 1;
Fig. 6 is a cross-sectional side view of a rod of the spoke across line 6-6 in Fig. 5;
Fig. 7 is a flowchart of a manufacturing method for a fiber reinforced thermoplastic spoke in accordance with the present invention.

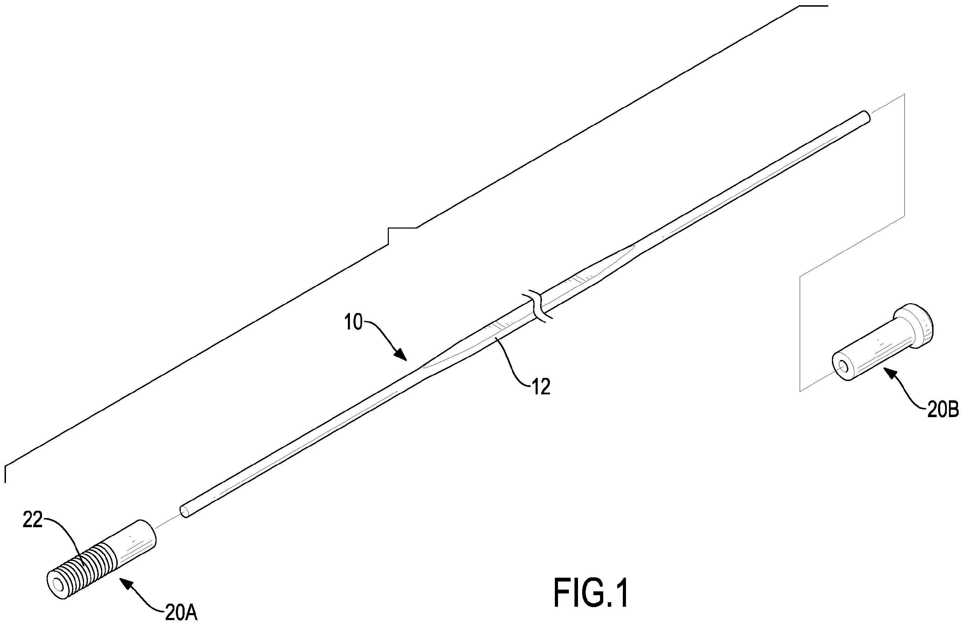

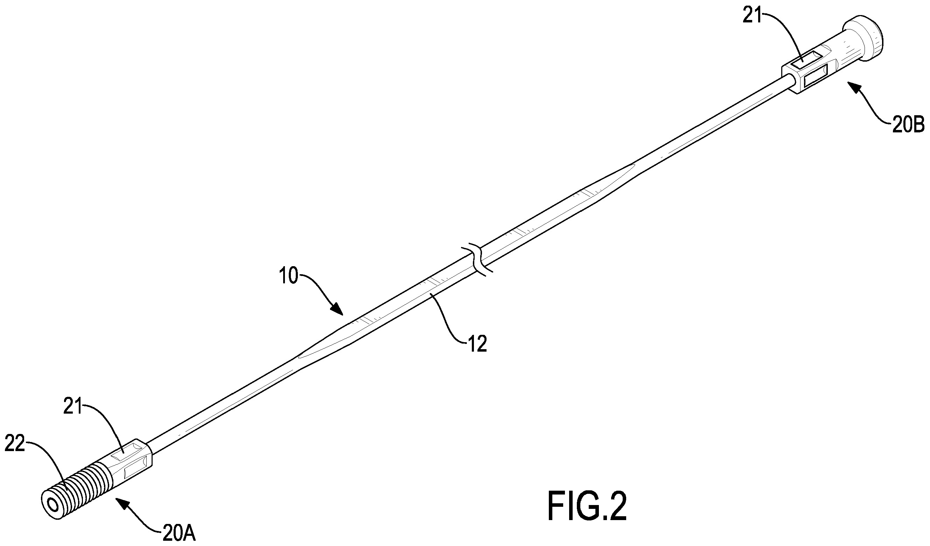

With reference to Figs. 1 and 2, an embodiment of a fiber reinforced thermoplastic spoke manufactured by a manufacturing method for the same has a rod 10 and two tubes 20A, 20B. Wherein, the fiber reinforced thermoplastic spoke of the present invention is configured to connect a bicycle hub and a bicycle rim. The rod 10 is made of a composite material containing thermoplastic resin and fibers.

With reference to Figs. 1 and 2, the rod 10 has a wind-resistant section 12. The wind-resistant section 12 is disposed at a middle portion of the rod 10 and has a thin cross-section for reducing wind resistance.

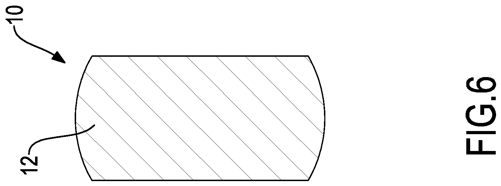

With reference to Figs. 1, 2, and 6, a cross section of the wind-resistant section 12 is approximately rectangular. Practically, as long as the cross-section of the wind-resistant section 12 is sufficiently thin for reducing wind resistance, the contour of the cross-section of the wind-resistant section 12 is not restricted.

In the present invention, the rod 10 may be made of a composite material containing thermoplastic resin and fibers such as carbon fibers, Kevlar fibers, Dyneema fibers, Nylon fibers, or other fibers with tenacity.

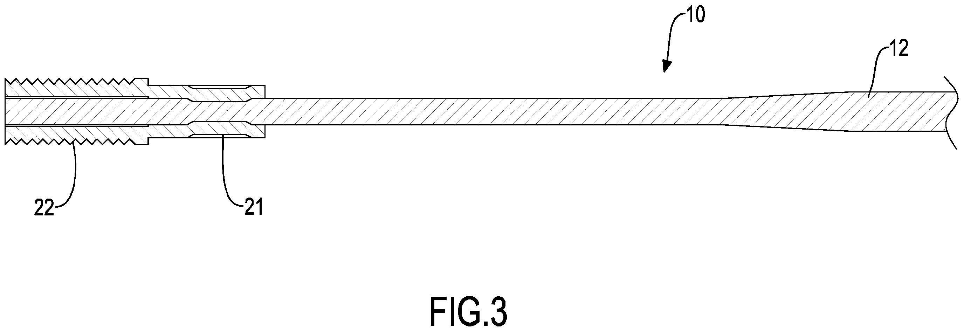

With reference to Figs. 2 and 3, the two tubes 20A, 20B are mounted on and around the rod 10 and are respectively adjacent to two opposite ends of the rod 10. Each tube 20A/20B may be made of metal or other flexible material. Each tube 20A/20B can be heated and pressed together to have at least one engaging recess 21 radially embedded in the rod 10. Each engaging recess 21 has a width W and a depth D. Wherein, the width W of each engaging recess 21 is defined along an extending direction of the rod 10, and the depth D of each engaging recess 21 is defined along a radial direction of the rod 10. Practically, said engaging recess 21 of each tube 20A/20B may be implemented as multiple engaging recesses 21. The multiple engaging recesses 21 surround a circumference of the rod 10. Specifically, each tube 20A/20B has four said engaging recesses 21 disposed at the circumference of the rod 10 in the embodiment of the present invention. Moreover, the multiple engaging recesses 21 of each tube 20A/20B may be divided into two groups. The engaging recesses 21 respectively of the two groups are spaced apart and respectively surround the circumference of the rod 10 to enhance an engagement between each tube 20A/20B and the rod 10.

With reference to Figs. 2 and 3, the tube 20A has a thread 22, and the tube 20B has an engaging head 23.

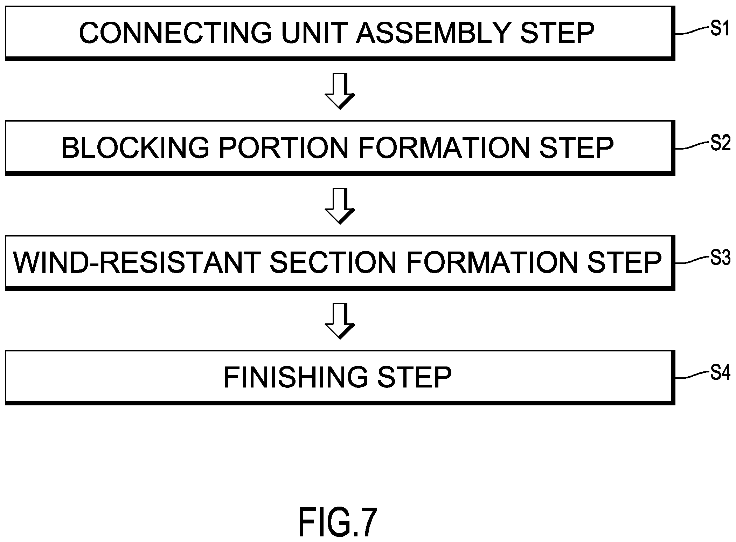

With reference to Fig. 7, a manufacturing method for a fiber reinforced thermoplastic spoke comprises steps of a tube assembly step S1, a thermoforming step S2, a wind-resistant section formation step S3, and a finishing step S4.

In the tube assembly step S1: first of all, prepare one said rod 10 made of a composite material containing thermoplastic resin and fibers and a said tube 20A/20B. Then, mount the tube 20A/20B on and around the rod 10.

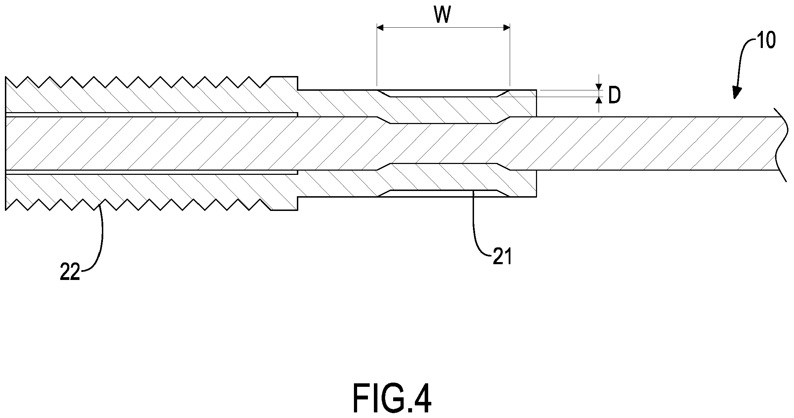

In the thermoforming step S2: heat and press the rod 10 and the tube 20A/20B together to deform the rod 10 made of a composite material containing thermoplastic resin and the tube 20A/20B together. Said engaging recess 21 radially embedded in the rod 10 shown in Figs. 2 to 4 is formed. Accordingly, the tube 20A/20B and the rod 10 engage with each other.

In the wind-resistant section formation step S3: heat and shape the middle portion of the rod 10 to form the wind-resistant section 12 with said thin cross-section to reduce wind resistance. In the present invention, the wind-resistant section formation step S3 may be performed before the thermoforming step S2. Sequences of the thermoforming step S2 and the wind-resistant section formation step S3 are not limited.

In the finishing step S4: process the rod 10 to remove rough edges, formed by heating and shaping, on the wind-resistant section 12 of the rod 10 especially.

Compared to a conventional carbon spoke combining a carbon rod and a connecting unit by glue, the fiber reinforced thermoplastic spoke, manufactured by the manufacturing method of the present invention, fixes the tube 20A/20B via heating and pressing the tube 20A/20B and the rod 10 together. The tube 20A/20B mounted on and around the rod 10 deform together and form said recess 21 circularly embedded in the rod 10 to engage with each other. Therefore, the connection between the rod 10 and the tube 20A/20B is enhanced, and detachment between of the rod 10 and the tube 20A/20B due to deterioration of the glue between the rod 10 and the tube 20A/20B can be avoided.

Please refer to the following table: the spoke of the present invention with the rod 10 having a maximum diameter 2.25 mm undergoes a tension test.

| Maximum diameter (mm) | Width (mm) | Depth (mm) | Tension (kgf) |
|---|---|---|---|
| 2.25 | 9 | 0.55 | 294 |
| 2.25 | 9 | 0.62 | 356 |
| 2.25 | 9 | 0.62 | 368 |
| 2.25 | 9 | 0.62 | 365 |
| 2.25 | 9 | 0.62 | 380 |
| 2.25 | 9 | 0.61 | 361 |
| 2.25 | 9 | 0.61 | 365 |
| 2.25 | 9 | 0.59 | 361 |

According to the above table, each engaging recess 21 of the tube 20A/20B has the width W being 9 mm and the depth being greater than or equal to 0.3 mm and is less than or equal to 0.9 mm. The tube 20A/20B detaches from the rod 10 when a tension subjected to the spoke exceeds 290 kgf.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A spoke, **characterized in that** the spoke comprises:
a rod (10) made of a composite material containing thermoplastic resin and fibers; and
at least one tube (20A/20B), each one of the at least one tube (20A/20B) having at least one engaging recess (21), and each one of the at least one engaging recess (21) radially embedded in the rod (10).

2. The spoke as claimed in claim 1, wherein
each one of the at least one engaging recess (21) of each one of the at least one tube (20A/20B) has
a width (W) defined along an extending direction of the rod (10) and being 9 mm; and
a depth (D) defined along a radial direction of the rod (10) and being greater than or equal to 0.3 mm and less than or equal to 0.9 mm.

3. The spoke as claimed in claim 1 or 2, wherein the at least one engaging recess (21) of each one of the at least one tube (20A/20B) includes multiple engaging recesses (21) surrounding a circumference of the rod (10).

4. The spoke as claimed in any one of claims 1 to 3, wherein
the rod (10) has a wind-resistant section (12) disposed at a middle portion of the rod (10) and formed by heating and shaping; and
the wind-resistant section (12) has a thin cross-section.

5. A manufacturing method for a fiber reinforced thermoplastic spoke comprising:
a tube assembly step (S1): preparing a rod (10) made of a composite material containing thermoplastic resin and fibers and a tube (20A/20B) and mounting the tube (20A/20B) on and around the rod (10);
a thermoforming step (S2): heating and pressing the rod (10) and the tube (20A/20B) together to deform the rod (10) and the tube (20A/20B) together to form at least one engaging recess (21), radially embedded in the rod (10) for engaging the tube (20A/20B) and the rod (10); and
a finishing step (S4): processing the rod (10) to remove rough edges, formed by heating and shaping, on the rod (10).

6. The manufacturing method for a fiber reinforced thermoplastic spoke as claimed in claim 5, wherein
the manufacturing method has a wind-resistant section formation step (S3): heating and shaping a middle portion of the rod (10) to form a wind-resistant section (12) with a thin cross-section for reducing wind resistance.

## Amended claims

### Amended claims in accordance with Rule 137(2) EPC.

1. A manufacturing method for a fiber reinforced thermoplastic spoke comprising:
a tube assembly step (S1): preparing a rod (10) made of a composite material containing thermoplastic resin and fibers and a tube (20A/20B) and mounting the tube (20A/20B) on and around the rod (10);
a thermoforming step (S2): heating and pressing the rod (10) and the tube (20A/20B) together to deform the rod (10) and the tube (20A/20B) together to form at least one engaging recess (21), radially located in the rod (10) for engaging the tube (20A/20B) and the rod (10); and
a finishing step (S4): processing the rod (10) to remove rough edges, formed by heating and shaping, on the rod (10).
